(19) Europäisches Patentamt / European Patent Office / Office européen des brevets

(11) **EP 1 126 419 B1**

(12) **FASCICULE DE BREVET EUROPEEN**

(45) Date de publication et mention
de la délivrance du brevet:
**10.10.2007   Bulletin 2007/41**

(51) Int Cl.:
**G07C 9/00** (2006.01)

(21) Numéro de dépôt: **01400338.8**

(22) Date de dépôt: **09.02.2001**

(54) **Procédé et dispositif d'authentification sécurisé d'une personne, par détection d'une caractéristique biométrique, pour une autorisation d'accès**

Verfahren und Vorrichtung zur gesicherten Zugangsberechtigungsprüfung mittels eines erfassten biometrischen Merkmals

Method and apparatus for secure authentication of a person for access control by means of a captured biometric characteristic

(84) Etats contractants désignés:
**AT BE CH CY DE DK ES FI FR GB GR IE IT LI LU MC NL PT SE TR**

(30) Priorité: **15.02.2000   FR 0001848**

(43) Date de publication de la demande:
**22.08.2001   Bulletin 2001/34**

(73) Titulaire: **SAGEM Défense Sécurité**
**75015 Paris (FR)**

(72) Inventeur: **Chabanne, Hervé Patrick Julien**
**78200 Mantes la Jolie (FR)**

(74) Mandataire: **Gorrée, Jean-Michel**
**Cabinet Plasseraud**
**52 rue de la Victoire**
**75440 Paris Cedex 09 (FR)**

(56) Documents cités:
EP-A- 0 359 729            FR-A- 2 671 210
US-A- 5 287 203            US-A- 5 491 563
US-A- 5 598 474            US-A- 5 680 460
US-A- 5 869 822

**Description**

La présente invention concerne des perfectionnements apportés dans le domaine de la sécurité de la mémorisation et/ou du transfert des informations représentatives de l'image détectée d'au moins une caractéristique biométrique d'une personne en vue d'une authentification sécurisée de la personne pour autoriser celle-ci à un accès, en particulier par l'intermédiaire d'un code d'identification personnel (connu dans la technique sous le nom de code PIN).

Dans la suite de la description, on entend donner au terme "accès" un sens général, c'est-à-dire aussi bien le sens d'accès physique, par exemple par l'ouverture d'une porte ou analogue, à un local ou à un bâtiment sous contrôle, que le sens d'accès à un service à travers un dispositif approprié (par exemple, accès à un système bancaire, utilisation d'un téléphone en particulier d'un téléphone portable, utilisation d'un ordinateur, etc...).

Jusqu'à présent, l'autorisation d'accès repose souvent sur l'usage d'un code PIN détenu par l'utilisateur et pouvant être utilisé en conjonction avec une carte à puce. Dans le cas de plus en plus fréquent où l'utilisateur doit avoir accès à plusieurs services et/ou appareils, il est nécessaire qu'il mémorise plusieurs codes PIN, ce qui peut engendrer des difficultés (oubli, confusion, interversion, etc...) .

De plus, la confidentialité de mémorisation du code PIN dans l'appareil ou la carte utilisée n'est pas toujours assurée : c'est ainsi que le code PIN est mémorisé en clair dans la mémoire de la puce microélectronique contenue dans les cartes bancaires.

Il est connu également de remplacer et/ou compléter le code PIN par une autre information caractéristique de l'utilisateur. C'est ainsi qu'il est connu d'avoir recours à cet effet à une caractéristique physique, ou caractéristique biométrique, de l'utilisateur (empreintes digitales d'un ou plusieurs doigts, géométrie d'une ou des deux mains, iris et/ou rétine d'un ou des deux yeux, géométrie de la figure, etc...) et de compléter et/ou remplacer le code PIN par une détection d'au moins une caractéristique biométrique.

Le document FR 2 671 210 concerne un procédé d'identification et d'authentification d'informations caractérisant un individu par vérification de ces informations au moyen d'un biomètre, procédé selon lequel on procède à un traitement identique de l'empreinte de l'individu préalablement enregistrée et tenue en mémoire dans une carte à mémoire et de son empreinte relevée dans le biomètre, lequel traitement consiste à organiser virtuellement des groupes séquentiels de mots en sousblocs matriciels, à organiser virtuellement les sous-blocs matriciels en un seul bloc matriciel, à réaliser des permutations des sous-blocs dans le bloc matriciel, à réaliser des permutations de mots à l'intérieur des sous-blocs matriciels, à déterminer un mot de parité pour chaque ligne du bloc matriciel, à comparer les mots de parité obtenus dans la carte et dans le biomètre, et à traiter l'empreinte en fonction du résultat de cette comparaison.

Dans tous les cas, le problème qui se pose réside dans la sécurité de la mémorisation et/ou du transfert des informations d'identification de la personne, afin d'éviter que ces informations puissent être détectées par un tiers qui aurait accès à la mémoire et/ou qui pourrait se connecter sur la ligne de transmission des informations, et qui pourrait ensuite utiliser ou faire utiliser ces informations de façon frauduleuse.

L'invention a donc essentiellement pour but de proposer des moyens particuliers propres à conférer une sécurité dans les mémorisations/transferts de données d'identification d'une personne en vue d'une autorisation d'accès de celle-ci notamment à l'aide d'un code PIN.

A ces fins, l'invention propose un procédé d'authentification sécurisé d'une personne pour autoriser celle-ci à un accès, par détection de caractéristiques biométriques de cette personne, lequel procédé se caractérise, étant constitué conformément à l'invention, en ce qu'il comprend les étapes énoncées dans la revendication 1.

Ainsi, on constitue une image codée desdites caractéristiques biométriques, qui est constituée par un groupe de $n$ sous-ensembles transformés qui représente une combinaison de transformations parmi toutes les combinaisons de transformations possibles sur les $n$ sous-ensembles de caractéristiques.

De façon préférentielle, le groupe de $n$ sous-ensembles de caractéristiques est transformé au moins une première fois et cette première transformation consiste en une translation-permutation appliquée à au moins un couple de sous-ensembles de caractéristiques : dans ce cas l'opération de translation-permutation des sous-ensembles de caractéristiques biométriques constitue la transformation fondamentale que l'on utilise systématiquement. Cette transformation peut être sélective, c'est-à-dire n'être appliquée qu'à un seul couple de sous-ensembles, ou bien être appliquée à plusieurs couples de sous-ensembles, ou bien encore être appliquée à tous les sous-ensembles.

En pratique, cette seule et unique étape de transformation offre un nombre de combinaisons suffisamment élevé pour conduire à une sécurité acceptable du codage de l'image détectée des caractéristiques biométriques de la personne, et il est parfaitement envisageable de limiter la transformation des sous-ensembles de caractéristiques biométriques à cette seule étape de translation-permutation.

Si l'on souhaite accroître la sécurité en augmentant le nombre des combinaisons possibles, on peut avoir recours alors à une deuxième transformation qui est effectuée sur le groupe des sous-ensembles de caractéristiques issu de la première transformation et la deuxième transformation consiste en une rotation, respectivement une homothétie, effectuée sur au moins un sous-ensemble ou sur chacun d'au moins certains sous-ensembles dudit groupe issu de la première transformation.

On peut encore augmenter le nombre des combinaisons possibles des transformations en ayant recours à une troisième transformation qui est effectuée sur le groupe des sous-ensembles de caractéristiques issu de la deuxième transformation et la troisième transformation consiste en une homothétie, respectivement une rotation, effectuée sur au moins un sous-ensemble ou sur chacun d'au moins certains sous-ensembles dudit groupe issu de la deuxième transformation.

Là encore, aussi bien la deuxième transformation que la troisième transformation peuvent porter sur tout ou partie des sous-ensembles. Au surplus, le sens et l'angle de la rotation et le rapport de l'homothétie peuvent varier d'un sous-ensemble à l'autre, ce qui complique encore une détection inverse frauduleuse.

Au surplus, on peut ajouter dans le groupe des sous-ensembles de caractéristiques, avant la première transformation et/ou entre deux transformations et/ou après la dernière transformation, au moins un faux sous-ensemble de caractéristiques (leurre). Grâce à cet ajout de leurres, on augmente le nombre des sous-ensembles de l'ensemble codé obtenu au bout du compte, et donc on accroît ainsi le nombre des combinaisons des transformations possibles, ce qui augmente la sécurité : un tiers qui détecterait les sous-ensembles codés de caractéristiques biométriques devrait, pour tenter de retrouver l'ensemble d'origine, essayer toutes les combinaisons possibles, lesquelles, même avec un nombre relativement restreint de sous-ensembles (par exemple une demi-douzaine) et un petit nombre d'étapes de transformations (par exemple de une à trois), sont en nombre considérable rendant la tentative impossible à mettre en oeuvre en pratique par des moyens habituels.

On soulignera ici que l'ensemble et les sous-ensembles de caractéristiques biométriques ne sont pas constitués par l'image même (image photographique) de la caractéristique biométrique détectée sur la personne (par exemple l'empreinte digitale d'un de ses doigts), mais par des données numériques définissant les ou des points singuliers de cette caractéristique biométrique.

Dans ces conditions, les transformations précitées ne sont pas toutes de même nature :

- dans la translation-permutation, il y a déplacement physique du sous-ensemble qui, d'un emplacement initial dans la suite des sous-ensembles, parvient à un autre emplacement dans la suite ; au cours de cette transformation les coordonnées des points relevés sont modifiées ;
- dans la rotation et l'homothétie par contre, le sous-ensemble transformé conserve son emplacement dans la suite ; mais les données de ce sous-ensemble sont modifiées (changées et/ou complétées) pour intégrer la nouvelle position angulaire (sens et amplitude) ou la nouvelle échelle (rapport d'homothétie) des points caractéristiques définis par ce sous-ensemble.

Grâce au procédé de codage qui vient d'être décrit, il devient possible de mémoriser et/ou de transmettre de façon sécurisée l'ensemble codé des caractéristiques biométriques de la personne ; la restitution de l'ensemble d'origine est effectuée en mettant en oeuvre des algorithmes de reconnaissance biométrique connus insensibles aux transformations, comme cela est exposé dans ce qui suit.

Dans un mode de mise en oeuvre du procédé de l'invention :

- on commence par constituer l'ensemble non codé de caractéristiques biométriques qu'on enregistre dans une mémoire protégée,
- à chaque demande d'accès de la personne, on établit le groupe de sous-ensembles codés de caractéristiques biométriques et on transmet ledit groupe de sous-ensembles codés à la mémoire pour comparaison de celui-ci avec l'ensemble non codé de caractéristiques tenu en mémoire,
- en fonction du résultat de la comparaison, on émet une instruction vers la demande d'accès pour autoriser ou interdire l'accès de la personne.

Dans un autre mode de mise en oeuvre de ce procédé d'authentification sécurisé selon l'invention :

- on commence par détecter les caractéristiques biométriques de la personne et par constituer le groupe des sous-ensembles codés de caractéristiques biométriques qu'on enregistre dans une mémoire,
- à chaque demande d'accès de la personne, on détecte les caractéristiques biométriques de la personne et on constitue l'ensemble non codé de ses caractéristiques biométriques,
- on extrait de la mémoire le groupe de sous-ensembles codés de caractéristiques que l'on transmet vers la demande d'accès où on le compare avec l'ensemble non codé, et
- en fonction du résultat de la comparaison, on émet une instruction pour autoriser ou interdire l'accès de la personne.

Dans l'un et l'autre des modes de mise en oeuvre ci-dessus, l'ensemble non codé n'est ni mémorisé dans une mémoire non protégée, ni transmis à distance, de sorte qu'un tiers ne peut avoir accès qu'aux seuls sous-ensembles codés dont l'utilisation lui est interdite en pratique eu égard au nombre trop élevé des combinaisons à essayer.

Pour fixer les idées, si l'ensemble initial de caractéristiques biométrique est décomposé en six sous-ensembles, si on ajoute douze faux sous-ensembles ou leurres, et si le nombre des transformations est de dix, le nombre des combinaisons possibles est

$$C_6^{18} \times 10^6 = 18564000000.$$

En pratique, on limite ce nombre de combinaisons, en limitant le nombre de transformations possibles ou en utilisant des codes correcteurs d'erreurs pour augmenter la fiabilité du système.

Par exemple on limite à trois le nombre des transformations (permutation, rotation, homothétie) ; le nombre des combinaisons possibles reste cependant de :

$$C_6^{18} \times 3^6 = 13153156.$$

Dans ces conditions la détection frauduleuse des sous-ensembles codés ne peut pas être entreprise de façon pratique pour conduire à une reconstitution de l'image complète d'origine.

En pratique, la comparaison des sous-ensembles codés et de l'ensemble non codé est menée en comparant successivement les sous-ensembles codés de caractéristiques, à travers les algorithmes insensibles aux transformations, avec l'ensemble non codé de caractéristiques biométriques jusqu'à coïncidences respectives des sous-ensembles codés avec des parties respectives de l'ensemble non codé. Cette comparaison représente une tâche qui n'est pas trop complexe et qui peut être assurée par le terminal auquel la personne se présente pour obtenir son autorisation d'accès.

De préférence, en cas de non coïncidence d'un sous-ensemble codé de caractéristiques avec une partie de l'ensemble de caractéristiques non codé, on fait intervenir un code correcteur d'erreur et on émet une autorisation d'accès si une proportion prédéterminée des $n$ sous-ensembles codés, après correction d'erreur éventuelle, trouve des correspondances respectives dans l'ensemble non codé, tandis qu'on émet une interdiction d'accès si ladite proportion prédéterminée de sous-ensembles codés, après correction d'erreur éventuelle, ne trouve pas de correspondances respectives dans l'ensemble non codé.

Pour fiabiliser l'authentification de la personne, on peut en outre prévoir que, après la mise en correspondance des sous-ensembles codés avec l'ensemble non codé, on compare le groupe des sous-ensembles codés et l'ensemble non codé du point de vue d'au moins une caractéristique additionnelle non décelable dans les sous-ensembles codés individuels et non pris en compte dans les étapes précédentes

et on n'émet une autorisation d'accès qu'en cas de correspondance majoritaire également sur ladite caractéristique additionnelle.

Dans un grand nombre d'applications visées par l'invention, les caractéristiques biométriques sont celles des empreintes digitales d'au moins un doigt de la personne.

Dans ce cas, pour augmenter la précision du système, on peut prévoir que les caractéristiques biométriques sont celles des empreintes digitales de plusieurs doigts de la personne. Pour ne pas accroître inconsidérément le nombre des sous-ensembles à traiter, on peut faire en sorte que, le nombre des doigts utilisés étant $p$, on établit pour chaque doigt un nombre $n/p$ de sous-ensembles de caractéristiques biométriques, afin que le nombre total de sous-ensembles de caractéristiques demeure égal à $n$.

Pour ajouter encore une autre information, on peut prévoir également que, les empreintes digitales des doigts des mains étant classables en k types généraux, on détermine, lors de la détection des caractéristiques des empreintes digitales de la personne, le type K auquel elles appartiennent et on utilise le type K comme information additionnelle aux sous-ensembles codés.

Une application particulièrement intéressante du procédé qui vient d'être décrit réside dans l'authentification sécurisée d'une personne titulaire d'un code d'identification personnel ou code PIN. En effet dans ce cas, le procédé peut consister conformément à l'invention en ce que :

- on met en oeuvre le procédé d'authentification sécurisé qui vient d'être décrit ;
- au cours de la comparaison des sous-ensembles codés avec l'ensemble non codé à travers des algorithmes insensibles aux transformations, on détecte, à l'aide desdits algorithmes, la combinaison des transformations subies antérieurement par les sous-ensembles codés,
- on élabore, notamment à partir de la combinaison des transformations détectées par les algorithmes insensibles aux transformations, une clé que l'on considère comme code PIN affecté à la personne,

- et finalement on utilise le code PIN ainsi élaboré pour commander l'autorisation d'accès de la personne.

Un tel procédé de génération automatique du code PIN donnant l'autorisation d'accès à la personne est particulièrement intéressant car non seulement il décharge la personne de la mémorisation continue de son code PIN, mais encore il permet de sécuriser tout le processus d'autorisation d'accès.

Au surplus le code PIN est généré automatiquement et indépendamment de la personne : on peut alors s'affranchir du code alphanumérique traditionnellement utilisé et faire en sorte que le code PIN soit une fonction quelconque aussi complexe que souhaité.

A titre d'exemple, on peut prévoir la génération d'une clé intermédiaire formée de la combinaison C($i$, $t$) où $i$ est l'indice de chaque sous-ensemble correspondant à la transformation qui lui a été appliquée et $t$ la transformation qui lui a été appliquée. On peut alors établir une clé finale, tenant compte qu'une quantité d'informations plus importante, qui résulte, par exemple dans le cas où la caractéristique biométrique est constituée par les empreintes digitales d'au moins un doigt de la personne, de la concaténation de la clé intermédiaire précitée et d'autres informations, par exemple celles liées à la classification (type) de l'empreinte, la fréquence des sillons, ou d'autres informations relatives aux minuties (points caractéristiques des empreintes) telles que la valence (bifurcation ou fin des sillons) ou la courbure générale des sillons autour du point caractéristique. On ajoute alors un code d'erreur qui conduit à un code final propre à faire office de code PIN.

Toujours dans le même but, on peut également envisager que le procédé puisse consister conformément à l'invention en ce que :

- on met en oeuvre le procédé d'authentification sécurisé décrit plus haut ;
- au cours de la comparaison des sous-ensembles codés avec l'ensemble non codé à travers des algorithmes insensibles aux transformations, on détecte, à l'aide desdits algorithmes, la combinaison des transformations subies antérieurement par les sous-ensembles codés,
- on recherche la combinaison ainsi trouvée des transformations dans une table renfermant, d'une part, une liste de combinaisons de transformations possibles et, d'autre part, une liste de codes PIN qui sont en relation biunivoque, et on relève le code PIN en relation avec la combinaison trouvée,
- et finalement on utilise le code PIN sélectionné pour commander l'autorisation d'accès de la personne.

Dans ce cas, il est possible que la personne connaisse son code PIN, qui peut alors être un simple mot alphanumérique, et la mise en oeuvre du procédé de l'invention permet la recherche sécurisée et l'émission automatique dudit code PIN à partir d'une simple lecture d'une caractéristique biométrique de la personne.

Au surplus, il peut être avantageux de prévoir qu'en cas d'une mise en oeuvre invalide de l'un ou l'autre procédé qui viennent d'être indiqués (mauvais fonctionnement des appareils, mauvaise lecture de la caractéristique biométrique, ...), la personne soit alors autorisée à introduire manuellement, à l'aide d'un clavier, un code PIN qu'elle détient personnellement et qui soit peut être le même que celui générable automatiquement, soit peut en être différent.

Dans ce cas, il s'agit d'une combinaison des deux systèmes, à savoir l'association à chaque personne de deux codes PIN, l'un complexe généré et émis automatiquement en restant ignoré de la personne et l'autre connu de la personne et utilisé manuellement seulement lorsque la personne y est autorisée.

Selon un autre de ses aspects, l'invention propose également un dispositif d'authentification sécurisé d'une personne pour autoriser celle-ci à un accès, par détection d'au moins une caractéristique biométrique de cette personne, pour la mise en oeuvre du procédé d'authentification sécurisé décrit plus haut, ledit dispositif, étant agencé conformément à l'invention, se caractérisant comme énoncé dans la revendication 18.

De préférence, lesdits moyens transformateurs algorithmiques sont propres à effectuer au moins une première transformation du type translation-permutation, et éventuellement des seconde et troisième transformations du type rotation, respectivement homothétie. Avantageusement en outre, le dispositif peut comporter des moyens générateurs de faux sous-ensembles propres à engendrer au moins un faux sous-ensemble et à introduire celui-ci, en tant que leurre, parmi les sous-ensembles de caractéristiques biométriques, ce qui accroît le nombre des sous-ensembles dans l'ensemble codé.

Au surplus un tel dispositif d'authentification sécurisé peut trouver une application particulièrement intéressante pour la mise en oeuvre du procédé décrit plus haut lorsque la personne est titulaire d'un code PIN l'autorisant à un accès, un mode de réalisation dudit dispositif, étant agencé conformément à l'invention, se caractérisant en ce que les moyens générateurs d'une instruction d'autorisation sont propres, à partir des transformations que les algorithmes insensibles aux transformations ont détectées sur les sous-ensembles codés, à déterminer la combinaison correspondante des transformations et à élaborer à partir de ladite combinaison une clé utilisable en tant que code PIN.

Un autre mode de réalisation dudit dispositif, étant réalisé conformément à l'invention, se caractérise :

- en ce qu'il comprend des seconds moyens de mémorisation renfermant une table de relations biunivoques entre une multiplicité de combinaisons parmi lesquelles figure la combinaison particulière des transformations subies par les sous-ensembles codés et une multiplicité équivalente de codes PIN parmi lesquels figure, en correspondance avec la susdite combinaison particulière, le code PIN affecté à la personne,

- en ce que les algorithmes inclus dans les moyens de comparaison sont propres à détecter les transformations subies par les sous-ensembles codés et à déterminer la combinaison de ces transformations,
- en ce qu'il comporte des seconds moyens comparateurs propres à comparer la combinaison des transformations restituée par les algorithmes et les combinaisons contenues dans la table des seconds moyens de mémorisation,
- et en ce que les moyens générateurs d'une instruction d'autorisation sont placés sous la dépendance desdits seconds moyens comparateurs et sont propres à générer le code PIN correspondant à la combinaison détectée à destination d'un organe d'autorisation d'accès commandé par ledit code PIN.

Il est alors possible de faire en sorte que le dispositif comporte en outre des moyens d'introduction manuelle du ou d'un code PIN par la personne et que les moyens d'introduction manuelle soient placés sous la dépendance des susdits moyens générateurs pour être inhibés lorsque le dispositif est propre à générer automatiquement la recherche et l'émission du code PIN et pour être activés lorsque la génération automatique du code PIN n'est pas possible.

Dans un mode de réalisation propre à convenir à de nombreuses applications, les moyens capteurs sont propres à détecter les empreintes digitales d'au moins un doigt de la personne.

L'invention sera mieux comprise à la lecture de la description qui suit de certains modes de réalisation préférés donnés uniquement à titre d'exemples nullement limitatifs. Dans cette description, on se réfère aux dessins annexés sur lesquels :

- les figures 1A, 1B et 2 à 6 illustrent diverses étapes du procédé de codage d'une image détectée de caractéristiques biométriques d'une personne, conformément à l'invention ;
- la figure 7 est un schéma synoptique illustrant un mode de réalisation d'un dispositif conforme à l'invention pour la mise en oeuvre du procédé de codage d'une image détectée de caractéristiques biométriques d'une personne ;
- les figures 8 et 9 sont deux schémas synoptiques illustrant respectivement deux modes de réalisation d'un dispositif d'authentification sécurisé d'une personne pour autoriser celle-ci à un accès, conformément à l'invention ; et
- les figures 10 et 11 sont deux schémas synoptiques illustrant respectivement deux modes de réalisation d'un dispositif d'authentification sécurisé d'une personne titulaire d'un code d'authentification personnel PIN l'autorisant à un accès, conformément à l'invention.

Dans la description qui suit, on se réfère plus particulièrement à la caractéristique biométrique constituée par les empreintes digitales d'un ou plusieurs doigts d'au moins une main d'une personne, car il s'agit là d'un cas appelé à un grand développement, étant cependant entendu que la mise en oeuvre de l'invention peut être menée sur la base de toute autre caractéristique biométrique de la personne, voire sur la base d'une combinaison de plusieurs caractéristiques biométriques de même nature (empreintes digitales de plusieurs doigts par exemple) ou de nature différente (empreinte digitale d'un doigt et iris d'un oeil, par exemple).

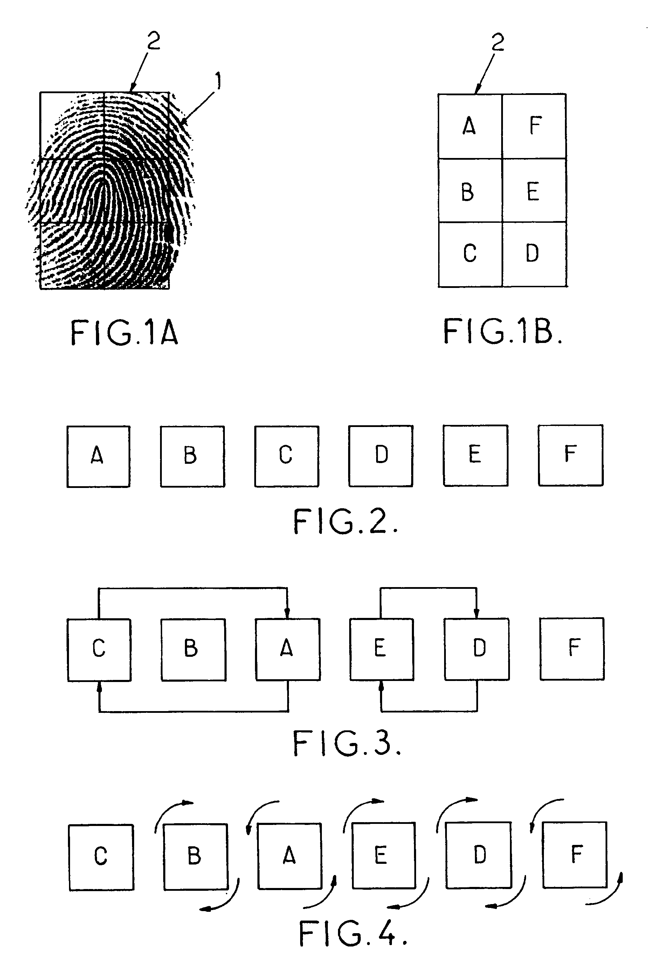

A l'aide d'un capteur approprié connu de l'homme de métier, on détecte au moins une caractéristique biométrique de la personne, ici cette caractéristique biométrique étant constituée de l'empreinte digitale 1 d'un de ses doigts (figure 1A qui montre l'empreinte 1 à échelle agrandie). On établit ainsi un ensemble 2 de caractéristiques biométriques (ou "template") caractérisant l'empreinte 1 (par exemple les minuties), puis on partitionne l'ensemble 1, comme illustré à la figure 1B, en un nombre $n$ de sous-ensembles (ou "sous-templates"). Dans l'exemple de la figure 1B, les sous-ensembles sont au nombre de six, et sont désignés par une référence alphabétique de A à F.

Pour faciliter la compréhension, on a superposé sur la figure 1A la représentation de type photographique de l'empreinte 1 et la schématisation sous forme d'un rectangle partitionné de l'ensemble 2 des caractéristiques biométriques détectées (qui en pratique est constitué d'un ensemble de données caractérisant les points singuliers de l'empreinte).

Ainsi, de l'ensemble 2 de caractéristiques biométriques, on extrait une suite de $n$ sous-ensembles A à F (figure 2), étant entendu que le repérage de A à F effectué sur la figure 1B est totalement arbitraire et pourrait être différent si nécessaire.

On applique alors à au moins un des sous-ensembles ou à chacun d'au moins certains sous-ensembles au moins une transformation géométrique du type translation-permutation et/ou rotation et/ou homothétie. En pratique l'ordre des transformations, lorsque plusieurs transformations successives sont effectuées, importe peu.

Chaque sous-ensemble peut faire l'objet d'une transformation indépendamment des autres images, autrement dit seuls certains sous-ensembles peuvent être transformés, et le sens et l'amplitude de la transformation (rotation, homothétie) peuvent varier d'un sous-ensemble à l'autre.

Lorsqu'une seule transformation est prévue, on peut (mais cela n'est pas une obligation) envisager qu'il s'agit d'une translation-permutation comme illustré à la figure 3 : à titre d'exemple, les sous-ensembles A et C ont été permutés et les sous-ensembles E et D ont été permutés, tandis que les sous-ensembles B et F ne sont pas transformés. Dans une transformation par translation-permutation, les coordonnées des points relevés sont modifiées.

Dans ce cas, lorsqu'une seconde transformation est prévue après la première, il peut s'agir d'une rotation ou d'une homothétie. Dans l'exemple de la figure 4, on a supposé une rotation portant sur tout ou partie des sous-ensembles de la figure 3. A titre d'exemple, le sous-ensemble C ne subit pas de rotation, tandis que les autres sous-ensembles subissent chacun une rotation soit dextrogyre (B, E, D), soit lévogyre (A, F). Au surplus, l'amplitude des rotations peut soit être la même pour tous les sous-ensembles avec une valeur prédéterminée conservée pour chaque opération de codage, soit être la même pour tous les sous-ensembles avec une valeur variant à chaque opération, soit avec des valeurs différentes pour tous les sous-ensembles ou certains sous-ensembles.

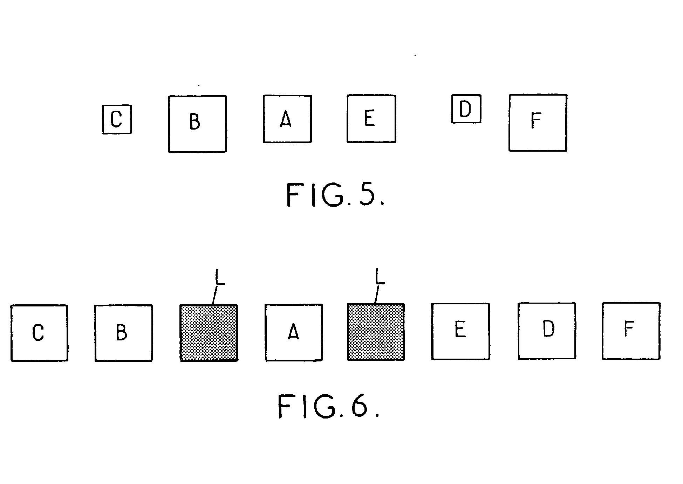

Lorsqu'une troisième transformation est effectuée sur les sous-ensembles issus de la deuxième transformation, il s'agit alors d'une homothétie, respectivement d'une rotation. Dans l'exemple de la figure 5 faisant suite à la rotation de la figure 4, il s'agit d'une homothétie portant sur tout ou partie des sous-ensembles de la figure 4. Dans cet exemple, les sous-ensembles B et F ne subissent pas de transformation homothétique, tandis que les autres sous-ensembles sont transformés avec un premier rapport (A, E) ou avec un second rapport d'homothétie (C, D). Bien entendu un rapport d'homothétie supérieur à 1 (agrandissement) peut être envisagé.

Bien entendu le groupe des sous-ensembles transformés par homothétie de la figure 5 peut constituer la seconde étape de transformation faisant immédiatement suite à la première étape (permutation de la figure 3).

Dans une transformation par rotation ou homothétie, les données du sous-ensemble sont modifiées (changées et/ou complétées) pour faire apparaître les informations propres à identifier la nouvelle position angulaire ou respectivement la nouvelle échelle.

On peut en outre augmenter artificiellement le nombre des combinaisons, pour un nombre n donné de sous-ensembles, en introduisant à un stade quelconque (avant, pendant ou après les transformations), un ou plusieurs faux sous-ensembles ou leurres L comme illustré à la figure 6 (qui correspond par exemple à l'ordre des sous-ensembles issus de la permutation telle qu'illustrée à la figure 3).

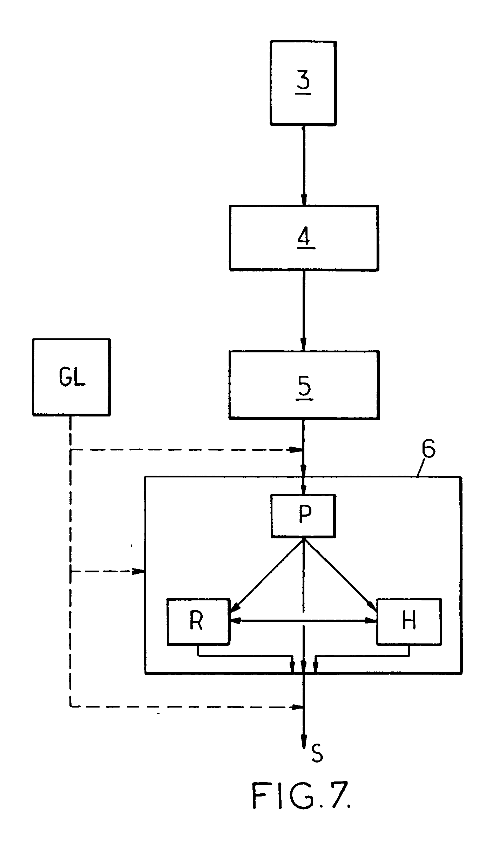

Pour la mise en oeuvre du procédé qui vient d'être décrit, on peut faire appel à un dispositif de codage d'une image détectée de caractéristiques biométriques d'une personne tel qu'illustré à la figure 7 des dessins ci-annexés.

Ce dispositif comprend des moyens capteurs 3 propres à détecter une caractéristique biométrique, en l'occurrence l'empreinte digitale 1 d'un doigt de la personne. Des moyens de traitement 4, placés sous la dépendance des précédents, sont propres à fournir un ensemble 2 de caractéristiques biométriques (c'est-à-dire un ensemble de données identifiant des points singuliers tels que les minuties de l'empreinte 1).

Des moyens de partition 5 partitionnent l'ensemble 2 en un nombre n de sous-ensembles de caractéristiques biométriques, par exemple en six sous-ensembles A à F.

Enfin les n sous-ensembles résultant de la partition sont traités par des moyens transformateurs algorithmiques 6 propres à faire subir éventuellement à chaque sous-ensemble une transformation par translation-permutation et/ou une rotation et/ou une homothétie. Les moyens transformateurs algorithmiques sont ici supposés distincts selon le type de transformation effectuée et désignés respectivement par P pour la translation-permutation, R pour la rotation et H pour l'homothétie. Mais il peut s'agir aussi des mêmes moyens algorithmiques propres à effectuer l'une de ces transformations en fonction d'un paramètre de commande.

Les moyens transformateurs 6 peuvent être agencés pour effectuer n'importe quelle transformation P, ou R ou H sur les sous-ensembles, ou plusieurs transformations successives dans un ordre quelconque. Toutefois, la transformation par translation-permutation P conduisant à un nombre de combinaisons suffisamment élevé pour certaines applications et étant par ailleurs aisée à mettre en oeuvre, on peut prévoir que les sous-ensembles seront soumis à au moins cette transformation P : les moyens transformateurs algorithmiques P sont donc placés en tête des moyens 6.

A la sortie S des moyens 6, on recueille un groupe de sous-ensembles de caractéristiques biométriques qui sont codés par les transformations P et/ou R et/ou H, ce groupe de sous-ensembles codés constituant une combinaison parmi toutes les combinaisons possibles.

Pour accroître artificiellement le nombre des combinaisons possibles pour un nombre n donné de sous-ensembles, on peut envisager d'incorporer dans le dispositif un générateur GL de faux sous-ensembles ou leurres L qui est propre à introduire ces leurres en tout endroit souhaité, soit en amont, soit en aval des moyens transformateurs 6, soit encore entre les moyens transformateurs spécifiques P, R ou H.

On obtient, grâce au dispositif de codage, un ensemble codé de caractéristiques biométriques qui peut alors être utilisé de façon sécurisée, par exemple pour être enregistré ou transmis.

Une application particulière, objet de l'invention, du procédé et du dispositif de codage qui viennent d'être décrits concerne l'authentification sécurisée d'une personne pour autoriser celle-ci à un accès, par détection de caractéristiques biométriques.

Pour ce faire, avec un décalage dans le temps soit avant, soit après l'établissement du groupe de sous-ensembles codés précité, on détecte les caractéristiques biométriques de la personne et on établit un ensemble non codé desdites caractéristiques biométriques. On enregistre le groupe des sous-ensembles codés ou le groupe des sous-ensembles non codés qui ont été établis en premier lieu dans le temps. Lors de l'établissement du groupe de sous-ensembles non codés, respectivement codés qui ont été établis en second lieu dans le temps (demande d'accès), on compare chaque sous-ensemble de caractéristiques, lu à travers un algorithme insensible aux transformations, avec l'ensemble non codé de caractéristiques jusqu'à coïncidence avec une partie de ce dernier et on classe ledit sous-ensemble codé en relation avec la partie coïncidente de l'ensemble non codé. Finalement, une fois que tous les sous-ensembles codés ont pu être mis en coïncidence avec des parties correspondantes de l'ensemble non codé, on émet une instruction d'autorisation d'accès pour la personne.

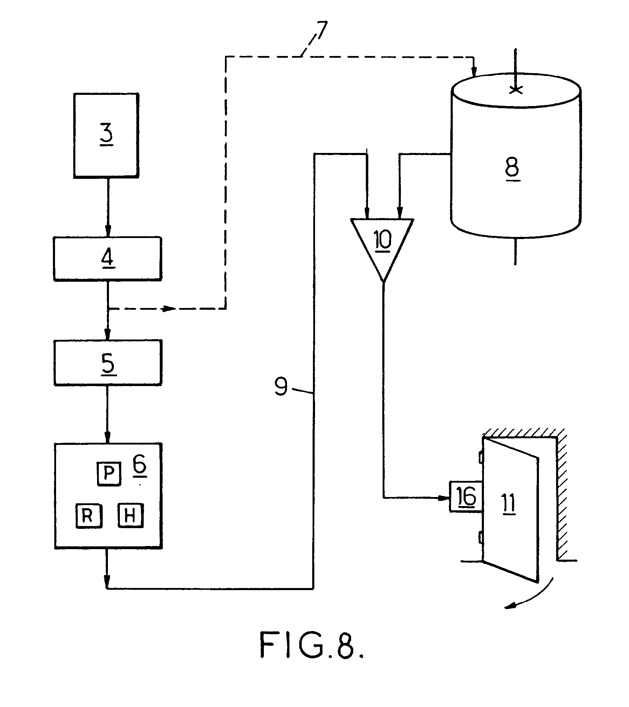

Dans une première mise en oeuvre, on peut, comme illustré à la figure 8, commencer par constituer l'ensemble non codé de caractéristiques biométriques fourni par les moyens de traitement 4 et transmettre (ligne en tirets 7) cet ensemble dans une mémoire protégée 8 dans laquelle il est enregistré.

Ultérieurement, à chaque demande d'autorisation d'accès de la personne, on établit comme indiqué précédemment le groupe de sous-ensembles codés de caractéristiques biométriques fourni par les moyens 6. Le groupe de sous-ensembles est ensuite transmis en 9 à des moyens comparateurs 10 aux fins de comparaison avec l'ensemble non codé de caractéristiques enregistré dans la mémoire 8.

En fonction du résultat de la comparaison, on émet en 16 vers la demande d'accès une instruction pour autoriser ou interdire l'accès en 11 de la personne.

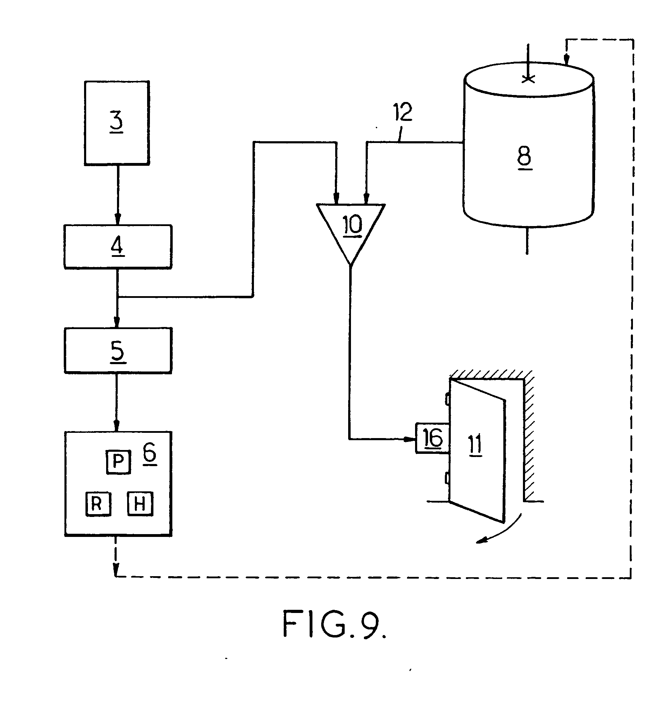

Dans une autre mise en oeuvre qui est préférée, on commence, comme illustré à la figure 9, par constituer un groupe de sous-ensembles codés délivré par les moyens transformateurs algorithmiques 6, et on enregistre ce groupe de sous-ensembles codés dans une mémoire 8.

Ultérieurement, à chaque demande d'autorisation d'accès, on détecte les caractéristiques biométriques de la personne et on constitue en 4 l'ensemble non codé de ces caractéristiques. On extrait alors de la mémoire 8 le groupe des sous-ensembles codés qui est envoyé en 12 vers la demande d'accès où les sous-ensembles codés sont comparés un à un, dans des moyens comparateurs 10, avec l'ensemble non codé. Finalement, en fonction du résultat de la comparaison, on émet en 16 une instruction pour autoriser ou interdire l'accès de la personne en 11.

De façon pratique, les moyens comparateurs 10 sont propres à comparer successivement les sous-ensembles codés, à travers les algorithmes qui sont insensibles aux transformations et que l'homme du métier a à sa disposition, avec l'ensemble non codé de caractéristiques biométriques jusqu'à coïncidence des sous-ensembles codés avec des parties respectives de l'ensemble non codé.

Une telle comparaison ne nécessite pas un travail trop complexe, et tous les moyens mis en oeuvre peuvent être regroupés sur le lieu de demande d'accès, autour du capteur 3, à l'exception éventuellement de la mémoire 8 qui peut être distante géographiquement.

En cas de non-coïncidence d'un sous-ensemble codé avec une partie de l'ensemble non codé, on peut faire intervenir un code correcteur d'erreur et on émet une autorisation d'accès si une proportion prédéterminée de $n$ sous-ensembles codés trouve, après correction éventuelle, des correspondances respectives majoritaires dans l'ensemble non codé, tandis qu'on émet une interdiction d'accès si ladite proportion prédéterminée des sous-ensembles codés, après correction d'erreur éventuelle, ne trouve pas de correspondances respectives majoritaires dans l'ensemble non codé. On peut ainsi s'affranchir de certains aléas de fonctionnement du dispositif.

La mise en correspondance de tous les sous-ensembles codés avec l'ensemble non codé peut se révéler insuffisante pour une reconnaissance exacte de la caractéristique biométrique détectée sur la personne. Pour compenser cette insuffisance, on prévoit donc qu'après la mise en correspondance des sous-ensembles codés avec l'ensemble non codé, on compare le groupe des sous-ensembles codés et l'ensemble non codé du point du vue d'au moins une caractéristique additionnelle qui n'est pas décelable, ou pas décelable dans son intégralité dans les sous-ensembles codés considérés individuellement et qui n'est pas pris en compte dans les étapes précédentes. Ces caractéristiques additionnelles (par exemple bifurcations, fin de sillons, type majoritaire d'un lot prédéfini de caractéristiques de l'ensemble codé; ...) considérées de façon globale sur l'ensemble de l'image peuvent fournir une information supplémentaire.

On peut également envisager de détecter les empreintes de plusieurs (par exemple deux) doigts de la personne et de traiter ces deux images. Toutefois pour ne pas accroître outre mesure le nombre de sous-ensembles à traiter, on peut prévoir que, si le nombre de doigts utilisés pour la détection est $p$, on établit pour chaque doigt un nombre $n/p$ de sous-ensembles afin que le nombre total des sous-ensembles demeure égal à $n$.

On peut aussi avoir recours à d'autres caractéristiques pour compléter les informations. Par exemple, les empreintes digitales sont classables en $k$ types généraux (en pratique en cinq types). On peut alors déterminer, lors de la détection des caractéristiques des empreintes digitales de la personne, le type K auquel elles appartiennent et on utilise le type K en tant qu'information additionnelle aux sous-ensembles codés.

Dans les schémas des figures 8 et 9, on a symbolisé l'autorisation ou l'interdiction d'accès comme étant, de façon simple, le résultat (OUI ou NON) de la comparaison effectuée par les moyens comparateurs 10.

On peut également envisager une solution plus élaborée qui consiste à faire commander par les moyens comparateurs 10, en cas de résultat positif, la génération d'un ordre complexe, tel qu'un code, qui est ensuite appliqué à des moyens de commande d'accès. Ce mode opératoire peut trouver une application particulièrement intéressante pour l'authentification sécurisée d'une personne titulaire d'un code d'identification personnel (ou code PIN) l'autorisant à un accès. Dans ce cas, les moyens propres à l'invention peuvent, en application de ce qui vient d'être indiqué, authentifier la personne, puis générer et émettre automatiquement son code d'accès PIN. A cette fin, au cours de la mise en oeuvre du procédé d'authentification précédemment décrit, lors de la comparaison des sous-ensembles codés avec l'ensemble non codé à travers des algorithmes insensibles aux transformations, on détecte à l'aide desdits algorithmes la combinaison des transformations subies antérieurement par les sous-ensembles codés.

On compare alors la combinaison ainsi trouvée avec une combinaison tenue en mémoire en relation avec un code PIN et, en cas d'identité, on émet le code PIN pour commander l'autorisation d'accès de la personne.

On peut envisager que la personne n'a aucune intervention à effectuer au niveau de la génération du code PIN et que celui-ci, qui est généré automatiquement, peut être quelconque et aussi complexe que désiré. En particulier, on peut faire en sorte que le code PIN soit la combinaison trouvée elle-même.

A titre d'exemple, lors de la comparaison de chaque sous-ensemble codé sur l'ensemble non codé, les algorithmes insensibles aux transformations permettent de discrétiser chaque transformation sur l'ensemble E des transformations possibles ; à chaque partie de l'ensemble non codé sélectionné est associé un indice i dans l'ensemble E correspondant à la formation identifiée. Une clé intermédiaire peut alors être construite par combinaison de l'indice i du sous-ensemble et de la transformation qui lui a été appliquée. Ainsi, en considérant six sous-ensembles, douze leurres et dix transformations par sous-ensemble, le nombre des combinaisons est

$$C_6^{18} \times 10^6 = 18564000000.$$

Toutefois, en pratique, on limite ce nombre de combinaisons, en limitant le nombre de transformations possibles ou en utilisant des codes correcteurs d'erreurs pour augmenter la fiabilité du système. Par exemple, si on se base sur les trois transformations P, R et H précitées, le nombre des combinaisons est

$$C_6^{18} \times 3^6 = 13153156.$$

Pour augmenter la quantité d'information, on calcule une clé finale résultant de la concaténation de la clé intermédiaire précitée et d'autres informations liées à la classification de l'empreinte digitale, la fréquence de ses sillons, et d'autres caractéristiques extraites sur les minuties (par exemple la valence et la courbure).

Enfin, on applique le code correcteur d'erreur sur cette clé finale, et on obtient un code final qui peut faire office de code PIN.

Dans ce cas, la forme complexe du code PIN fait qu'il n'aura pas nécessairement à être mémorisé par la personne.

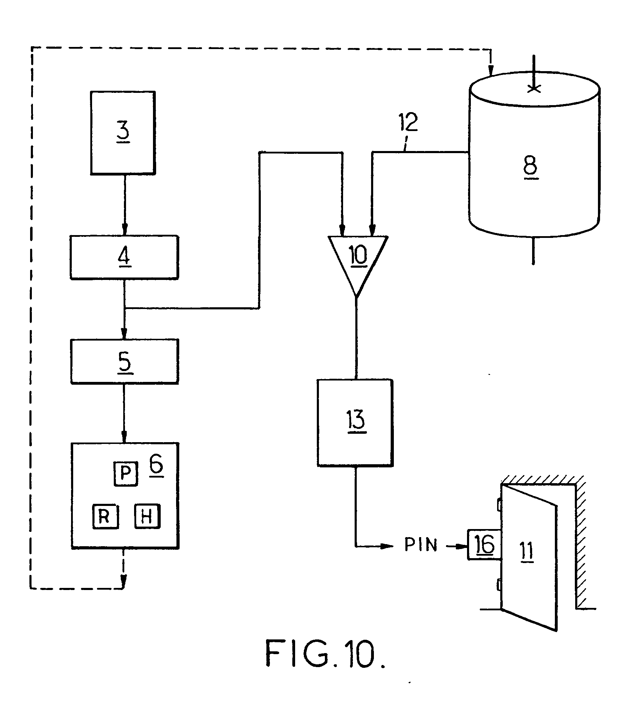

Le dispositif de la figure 9 précédemment décrit est donc complété comme illustré à la figure 10, pour mettre en oeuvre ce qui a été exposé plus haut, avec des moyens générateurs 13 placés sous la dépendance des moyens comparateurs 10 et propres à élaborer un code PIN qui est ensuite émis pour en 16 autoriser l'accès.

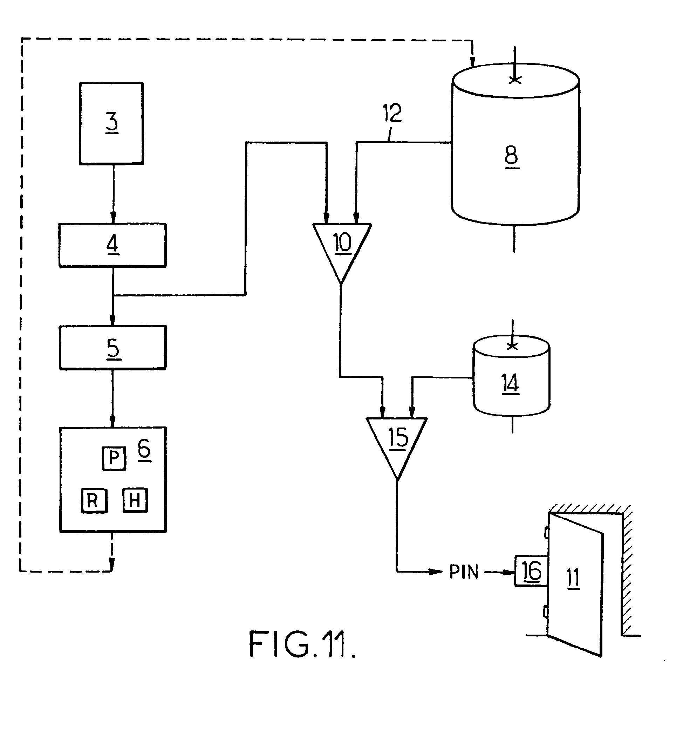

Il est également possible d'envisager qu'on détecte la combinaison des transformations subies antérieurement par les sous-ensembles codés à l'aide des algorithmes insensibles aux transformations et qu'ensuite, comme illustré à la figure 11, on recherche ladite combinaison dans une table mémorisée 14 renfermant, d'un côté, une liste de combinaisons de transformations possibles et, en regard, une liste de codes PIN, les transformations et les codes PIN étant en relations biunivoques. Ensuite de quoi on relève en 15 le code PIN en relation avec la combinaison trouvée et on utilise ce code PIN pour commander en 16 l'autorisation d'accès de la personne.

Les deux procédés qui viennent d'être décrits en regard des figures 10 et 11 sont particulièrement intéressants car ils laissent la possibilité de remédier à un dysfonctionnement du dispositif. A cet effet, on prévoit que la personne dispose d'un code PIN qui peut être différent du code PIN généré automatiquement par l'un des dispositifs des figures 10 ou 11, ou bien qui peut être le même dans le cas de la figure 11. Dans ces conditions la demande d'accès peut être effectuée manuellement, à l'aide par exemple d'un clavier auxiliaire, par la personne directement à l'aide de son propre code PIN si elle y est autorisée au terme d'une mise en oeuvre invalide du processus d'authentification et de génération automatique du code PIN.

**Revendications**

1. Procédé d'authentification sécurisé d'une personne pour autoriser celle-ci à un accès, par détection de caractéristiques biométriques de cette personne,

**caractérisé en ce qu'**il comprend les étapes consistant à :

- établir une image codée de caractéristiques biométriques de la personne en mettant en oeuvre les étapes qui suivent:

. on détecte (3) des caractéristiques biométriques (1) de la personne et on établit (4) un ensemble (2) de ces caractéristiques biométriques,
. on partitionne (5) ledit ensemble de caractéristiques en un nombre $n$ de sous-ensembles de caractéristiques (A-F), et
. on applique (6) à au moins un des sous-ensembles ou à chacun d'au moins certains sous-ensembles au moins une transformation géométrique du type translation-permutation (P), rotation (R), homothétie (H),

ce grâce à quoi on constitue une image codée desdites caractéristiques biométriques, qui est constituée par un groupe de $n$ sous-ensembles transformés qui représente une combinaison de transformations parmi toutes les combinaisons de transformations possibles sur les $n$ sous-ensembles de caractéristiques ;
- avec un décalage temporel soit avant, soit après l'établissement de l'image codée précitée :

• détecter (3) lesdites caractéristiques biométriques (1) de la personne et établir (4) un ensemble non codé (2) desdites caractéristiques biométriques,
• tenir en mémoire (8) le groupe des sous-ensembles de caractéristiques codés, respectivement l'ensemble non codé établi en premier lieu dans le temps,
• lors de l'établissement de l'ensemble non codé, respectivement du groupe de sous-ensembles codés de caractéristiques établi en second lieu dans le temps, comparer (10) chaque sous-ensemble codé de caractéristiques, lu à travers un algorithme insensible aux transformations, avec l'ensemble non codé de caractéristiques jusqu'à coïncidence avec une partie de ce dernier et classer ledit sous-ensemble codé en relation avec la partie coïncidente de l'ensemble non codé

et
- lorsque tous les sous-ensembles codés de caractéristiques ont pu être mis en coïncidence avec des parties correspondantes de l'ensemble non codé de caractéristiques, émettre (16) une instruction d'autorisation d'accès (11) pour la personne.

**2.** Procédé d'authentification sécurisé selon la revendication 1, **caractérisé en ce que** le groupe de $n$ sous-ensembles de caractéristiques (A-F) est transformé au moins une première fois et **en ce que** ladite première transformation consiste en une translation-permutation (P) appliquée à au moins un couple de sous-ensembles de caractéristiques.

**3.** Procédé d'authentification sécurisé selon la revendication 2, **caractérisé en ce qu'**une deuxième transformation est effectuée sur le groupe des sous-ensembles de caractéristiques issu de la première transformation et **en ce que** la deuxième transformation consiste en une rotation (R), respectivement une homothétie (H), effectuée sur au moins un sous-ensemble ou sur chacun d'au moins certains sous-ensembles dudit groupe issu de la première transformation (P).

**4.** Procédé d'authentification sécurisé selon la revendication 3, **caractérisé en ce qu'**une troisième transformation est effectuée sur le groupe des sous-ensembles de caractéristiques issu de la deuxième transformation et **en ce que** la troisième transformation consiste en une homothétie (H), respectivement une rotation (R), effectuée sur au moins un sous-ensemble ou sur chacun d'au moins certains sous-ensembles dudit groupe issu de la deuxième transformation (R, respectivement H).

**5.** Procédé d'authentification sécurisé selon l'une quelconque des revendications précédentes, **caractérisé en ce qu'**on ajoute dans le groupe des sous-ensembles de caractéristiques, avant la première transformation et/ou entre deux transformations et/ou après la dernière transformation, au moins un faux sous-ensemble de caractéristiques (leurre) (L), ce grâce à quoi on accroît le nombre des combinaisons de transformations possibles.

**6.** Procédé d'authentification sécurisé selon l'une quelconque des revendications 1 à 5, **caractérisé en ce que** :

- on commence par constituer (4) l'ensemble non codé de caractéristiques biométriques qu'on enregistre dans une mémoire protégée (8),
- à chaque demande d'accès de la personne, on établit (3-6) le groupe de sous-ensembles codés de caractéristiques biométriques et on transmet ledit groupe de sous-ensembles codés à la mémoire pour comparaison (10) de celui-ci avec l'ensemble non codé de caractéristiques tenu en mémoire,
- en fonction du résultat de la comparaison, on émet (16) une instruction vers la demande d'accès pour autoriser ou interdire l'accès (11) de la personne.

**7.** Procédé d'authentification sécurisé selon l'une quelconque des revendications 1 à 5, **caractérisé en ce que** :

- on commence par détecter les caractéristiques biométriques de la personne et par constituer (6) le groupe des sous-ensembles codés de caractéristiques biométriques qu'on enregistre dans une mémoire (8),
- à chaque demande d'accès de la personne, on détecte (3) les caractéristiques biométriques de la personne et on constitue (4) l'ensemble non codé de ses caractéristiques biométriques,
- on extrait de la mémoire le groupe de sous-ensembles codés de caractéristiques que l'on transmet vers la demande d'accès où on le compare (10) avec l'ensemble non codé, et
- en fonction du résultat de la comparaison, on émet (16) une instruction pour autoriser ou interdire l'accès (11) de la personne.

**8.** Procédé d'authentification sécurisé selon l'une quelconque des revendications 1 à 7, **caractérisé en ce qu'**on compare (10) successivement les sous-ensembles codés de caractéristiques, à travers les algorithmes insensibles aux transformations, avec l'ensemble non codé de caractéristiques biométriques jusqu'à coïncidences respectives des sous-ensembles codés avec des parties respectives de l'ensemble non codé.

**9.** Procédé d'authentification sécurisé selon la revendication 8, **caractérisé en ce qu'**en cas de non coïncidence d'un sous-ensemble codé de caractéristiques avec une partie de l'ensemble de caractéristiques non codé, on fait intervenir un code correcteur d'erreur et **en ce qu'**on émet une autorisation d'accès si une proportion prédéterminée des $n$ sous-ensembles codés, après correction d'erreur éventuelle, trouve des correspondances respectives dans l'ensemble non codé, tandis qu'on émet une interdiction d'accès si ladite proportion prédéterminée de sous-ensembles codés, après correction d'erreur éventuelle, ne trouve pas de correspondances respectives dans l'ensemble non codé.

**10.** Procédé d'authentification sécurisé selon l'une quelconque des revendications 1 à 9, **caractérisé en ce qu'**après la mise en correspondance des sous-ensembles codés avec l'ensemble non codé, on compare le groupe des sous-ensembles codés et l'ensemble non codé du point de vue d'au moins une caractéristique additionnelle non décelable dans les sous-ensembles codés individuels et non pris en compte dans les étapes précédentes et on n'émet une autorisation d'accès qu'en cas de correspondance majoritaire également sur ladite caractéristique additionnelle.

**11.** Procédé d'authentification sécurisé selon l'une quelconque des revendications 1 à 10, **caractérisé en ce que** les caractéristiques biométriques sont celles des empreintes digitales (1) d'au moins un doigt de la personne.

**12.** Procédé d'authentification sécurisé selon la revendication 11, **caractérisé en ce que** les caractéristiques biométriques sont celles des empreintes digitales de plusieurs doigts de la personne.

**13.** Procédé d'authentification sécurisé selon la revendication 12, **caractérisé en ce que**, le nombre des doigts utilisés étant $p$, on établit pour chaque doigt un nombre $n/p$ de sous-ensembles de caractéristiques biométriques, afin que le nombre total de sous-ensembles de caractéristiques demeure égal à $n$.

**14.** Procédé d'authentification sécurisé selon l'une quelconque des revendications 10 à 13, **caractérisé en ce que**, les empreintes digitales des doigts des mains étant classables en k types généraux, on détermine, lors de la détection des caractéristiques des empreintes digitales de la personne, le type K auquel elles appartiennent et on utilise le type K comme information additionnelle aux sous-ensembles codés.

**15.** Procédé d'authentification sécurisé d'une personne titulaire d'un code d'identification personnel PIN l'autorisant à un accès,
**caractérisé en ce que** :

- on met en oeuvre le procédé d'authentification sécurisé selon l'une quelconque des revendications 1 à 14 ;
- au cours de la comparaison (10) des sous-ensembles codés avec l'ensemble non codé à travers des algorithmes insensibles aux transformations, on détecte, à l'aide desdits algorithmes, la combinaison des transformations subies antérieurement par les sous-ensembles codés ;
- on élabore (13), notamment à partir de la combinaison des transformations détectées par les algorithmes insensibles aux transformations, une clé que l'on considère comme code PIN affecté à la personne;
- et finalement on utilise le code PIN ainsi élaboré pour commander (16) l'autorisation d'accès (11) de la personne ;

ce grâce à quoi le code PIN peut être une fonction quelconque.

**16.** Procédé d'authentification sécurisé d'une personne titulaire d'un code d'identification personnel PIN l'autorisant à un accès,
**caractérisé en ce que** :

- on met en oeuvre le procédé d'authentification sécurisé selon l'une quelconque des revendications 1 à 14,
- au cours de la comparaison (10) des sous-ensembles codés avec l'ensemble non codé à travers des algorithmes insensibles aux transformations, on détecte, à l'aide desdits algorithmes, la combinaison des transformations subies antérieurement par les sous-ensembles codés,
- on recherche (15) la combinaison ainsi trouvée des transformations dans une table (14) renfermant, d'une part, une liste de combinaisons de transformations possibles et, d'autre part, une liste de codes PIN qui sont en relation biunivoque, et on relève le code PIN en relation avec la combinaison trouvée,
- et finalement on utilise le code PIN sélectionné pour commander (16) l'autorisation d'accès (11) de la personne.

**17.** Procédé d'authentification sécurisé selon la revendication 15, **caractérisé en ce que** la personne dispose d'un code PIN et **en ce que** la demande d'accès peut être effectuée manuellement par la personne directement à l'aide de son propre code PIN si elle y est autorisée au terme d'une mise en oeuvre invalide du procédé d'authentification sécurisé automatique selon la revendication 15 ou 16.

**18.** Dispositif d'authentification sécurisé d'une personne pour autoriser celle-ci à un accès, par détection d'au moins une caractéristique biométrique de cette personne, pour la mise en oeuvre du procédé selon l'une quelconque des revendications 1 à 14, **caractérisé en ce qu'**il comprend :

- un dispositif de codage d'une image détectée de caractéristiques biométriques d'une personne, comprenant :

. des moyens capteurs (3) propres à détecter des caractéristiques biométriques d'une personne,
. des moyens de traitement (4), placés sous la dépendance des moyens capteurs, propres à établir un ensemble desdites caractéristiques biométriques détectées,
.des moyens de partition (5) propres à partitionner ledit ensemble en $n$ sous-ensembles de caractéristiques biométriques,
. des moyens transformateurs algorithmiques (6) propres à transformer géométriquement un sous-ensemble par translation-permutation (P), rotation (R), homothétie (H) pour fournir un sous-ensemble transformé,

ce grâce à quoi le dispositif de codage donne, d'un ensemble non codé de caractéristiques biométriques, un ensemble codé constitué de $n$ sous-ensembles transformés ;
- des moyens de mémorisation (8) pour enregistrer les sous-ensembles codés des caractéristiques biométriques ou l'ensemble non codé des caractéristiques biométriques ;
- des moyens de comparaison (10) propres à comparer successivement chaque sous-ensemble codé avec l'ensemble non codé, lesdits moyens comparateurs incluant des algorithmes insensibles aux transformations subies par les sous-ensembles codés ;
- et des moyens (13, 16) générateurs d'une instruction d'autorisation placés sous la dépendance desdits moyens de comparaison et propres à générer une instruction d'autorisation seulement lorsque les moyens comparateurs ont établi une correspondance majoritaire des sous-ensembles codés dans l'ensemble non codé.

**19.** Dispositif d'authentification sécurisé selon la revendication 18, **caractérisé en ce que** lesdits moyens transformateurs algorithmiques sont propres à effectuer au moins une première transformation du type translation-permutation (P), et éventuellement des seconde et troisième transformations du type rotation (R), respectivement homothétie (H).

**20.** Dispositif d'authentification sécurisé selon la revendication 18 ou 19, **caractérisé en ce qu'**il comporte en outre des moyens générateurs de faux sous-ensembles (GL) propres à engendrer au moins un faux sous-ensemble et à introduire celui-ci, en tant que leurre, parmi les sous-ensembles de caractéristiques biométriques, ce qui accroît le nombre des sous-ensembles dans l'ensemble codé.

**21.** Dispositif d'authentification sécurisé selon l'une quelconque des revendications 18 à 20, ladite personne étant titulaire d'un code d'identification personnel PIN l'autorisant à un accès, **caractérisé en ce que** les moyens (13, 16) générateurs d'une instruction d'autorisation sont propres, à partir des transformations que les algorithmes insensibles aux transformations ont détectées sur les sous-ensembles codés, à déterminer la combinaison correspondante des transformations et à élaborer à partir de ladite combinaison une clé utilisable en tant que code PIN.

**22.** Dispositif d'authentification sécurisé selon l'une quelconque des revendications 18 à 20, ladite personne étant titulaire d'un code d'identification personnel PIN l'autorisant à un accès, **caractérisé**

- **en ce qu'**il comprend des seconds moyens de mémorisation (14) renfermant une table de relations biunivoques entre une multiplicité de combinaisons parmi lesquelles figure la combinaison particulière des transformations subies par les sous-ensembles codés et une multiplicité équivalente de codes PIN parmi lesquels figure, en correspondance avec la susdite combinaison particulière, le code PIN affecté à la personne,
- **en ce que** les algorithmes inclus dans les moyens de comparaison sont propres à détecter les transformations subies par les sous-ensembles codés et à déterminer la combinaison de ces transformations,
- **en ce qu'**il comporte des seconds moyens comparateurs (15) propres à comparer la combinaison des transformations restituée par les algorithmes et les combinaisons contenues dans la table des seconds moyens de mémorisation,
- et **en ce que** les moyens générateurs d'une instruction d'autorisation (16) sont placés sous la dépendance desdits seconds moyens comparateurs (15) et sont propres à générer le code PIN correspondant à la combinaison détectée à destination d'un organe d'autorisation d'accès (11) commandé par ledit code PIN.

**23.** Dispositif d'authentification sécurisé selon la revendication 21 ou 22, **caractérisé en ce qu'**il comporte en outre des moyens d'introduction manuelle du ou d'un code PIN par la personne et **en ce que** les moyens d'introduction manuelle sont placés sous la dépendance des susdits moyens générateurs pour être inhibés lorsque le dispositif est propre à générer automatiquement la recherche et l'émission du code PIN et pour être activés lorsque la génération automatique du code PIN n'est pas possible.

**24.** Dispositif d'authentification sécurisé selon l'une quelconque des revendications 18 à 23, **caractérisé en ce que** les moyens capteurs sont propres à détecter les empreintes digitales d'au moins un doigt de la personne.

**Claims**

**1.** Method for secure authentication of a person in order to authorise his access through the detection of biometric characteristics of this person, **characterised in that** it comprises the steps consisting in:

- establishing a coded image of biometric characteristics of the person by implementing the following steps:

. biometric characteristics (1) of the person are detected (3) and a set (2) of these biometric characteristics is established (4),
. said set of characteristics is partitioned (5) into a number $\underline{n}$ of sub-sets of characteristics (A-F), and
. at least one geometric transformation of the type translation-permutation (P), rotation (R), homothety (H) is applied (6) to at least one of the sub-sets or to each of at least certain sub-sets,

by virtue of which a coded image of said biometric characteristics is constituted which comprises a group of $\underline{n}$ transformed sub-sets which represents a combination of transformations amongst all the possible combinations of transformations on the $\underline{n}$ sub-sets of characteristics;
- with a time interval either before or after the establishing of the afore-mentioned coded image:

• to detect (3) said biometric characteristics (1) of the person and to establish (4) a non-coded set (2) of said biometric characteristics,
• to hold in a memory (8) the group of the sub-sets of coded characteristics / the non-coded set established firstly in terms of time,
• during the establishing of the non-coded set / the group of coded sub-sets of characteristics established secondly in terms of time, to compare (10) each coded sub-set of characteristics, read by means of an algorithm which is not sensitive to the transformations, with the non-coded set of characteristics until there is coincidence with a part of the latter and to class said coded sub-set in relation to the coinciding part of the non-coded set

and

- when it has been possible to bring all the coded sub-sets of characteristics to coincide with corresponding parts of the non-coded set of characteristics, to send (16) an instruction to authorise access (11) for the person.

2. Method for secure authentication according to claim 1, **characterised in that** the group of $n$ sub-sets of characteristics (A-F) is transformed at least a first time and **in that** said first transformation consists of a translation-permutation (P) applied to at least one pair of sub-sets of characteristics.

3. Method for secure authentication according to claim 2, **characterised in that** a second transformation is realised on the group of the sub-sets of characteristics coming from the first transformation and **in that** the second transformation consists of a rotation (R) / a homothety (H) carried out on at least one sub-set or on each of at least certain sub-sets of said group coming from the first transformation (P).

4. Method for secure authentication according to claim 3, **characterised in that** a third transformation is realised on the group of the sub-sets of characteristics coming from the second transformation and **in that** the third transformation consists of a homothety (H) / a rotation (R) realised on at least one sub-set or on each of at least certain sub-sets of said group coming from the second transformation (R / H).

5. Method for secure authentication according to any one of the preceding claims, **characterised in that** at least one false sub-set of characteristics (deception) (L) is added in the group of sub-sets of characteristics before the first transformation and / or between two transformations and / or after the last transformation, by virtue of which the number of possible combinations of transformations is increased.

6. Method for secure authentication according to any one of the claims 1 to 5, **characterised in that**:

- to start with, the non-coded set of biometric characteristics is constituted which is registered in a protected memory (8),
- on each access request of the person, the group of coded sub-sets of biometric characteristics is established (3-6) and said group of coded sub-sets is transmitted to the memory for comparison (10) thereof with the non-coded set of characteristics held in the memory,
- depending upon the result of the comparison, an instruction to authorise or to prohibit the access (11) of the person is sent (16) to the access request.

7. Method for secure authentication according to any one of the claims 1 to 5, **characterised in that**:

- to start with, the biometric characteristics of the person are detected and the group of the coded sub-sets of biometric characteristics are constituted (6) which are recorded in a memory (8),
- on each access request of the person the biometric characteristics of the person are detected (3) and the non-coded set of his biometric characteristics is constituted (4),
- the group of coded sub-sets of characteristics is extracted from the memory which is sent to the access request where it is compared (10) with the non-coded set, and
- depending upon the result of the comparison, an instruction to authorise or to prohibit the access (11) of the person is sent (16).

8. Method for secure authentication according to any one of the claims 1 to 7, **characterised in that** the coded sub-sets of characteristics are compared (10) successively, using the algorithms which are not sensitive to the transformations, with the non-coded set of biometric characteristics until there are respective coincidences of the coded sub-sets with respective parts of the non-coded set.

9. Method for secure authentication according to claim 8, **characterised in that** in the case of non-coincidence of a coded sub-set of characteristics with a part of the non-coded set of characteristics, an error correcting code is introduced and **in that** an access authorisation is sent if a predetermined proportion of the $n$ coded sub-sets, after correction of possible errors, finds corresponding elements in the non-coded set, whereas an access prohibition is sent if said predetermined proportion of coded sub-sets, after correction of possible errors, do not find corresponding elements in the non-coded set.

10. Method for secure authentication according to any one of the claims 1 to 9, **characterised in that** after the coded sub-sets are brought into correspondence with the non-coded set, the group of the coded sub-sets and the non-coded set are compared with regard to at least one additional characteristic which is not detectable in the individual coded sub-sets and is not taken into account in the preceding steps and an access authorisation is only sent in case of majority correspondence also in relation to said additional characteristic.

11. Method for secure authentication according to any one of the claims 1 to 10, **characterised in that** the biometric characteristics are those of fingerprints (1) of at least one finger of the person.

12. Method for secure authentication according to claim 11, **characterised in that** the biometric characteristics are those of the fingerprints of several fingers of the person.

13. Method for secure authentication according to claim 12, **characterised in that**, the number of fingers used being $p$, a number $n/p$ of sub-sets of biometric characteristics are established for each finger, so that the total number of sub-sets of characteristics remains equal to $n$.

14. Method for secure authentication according to any one of the claims 10 to 13, **characterised in that**, the fingerprints of the fingers of the hand being classifiable in k general types, during the detection of the characteristics of the fingerprints of the person, the type K to which they belong is determined and the type K is used as additional information to the coded sub-sets.

15. Method for secure authentication of a person who has a PIN personal identification code authorising his access, **characterised in that**:

- the method for secure authentication is implemented according to any one of the claims 1 to 14;
- during the comparison (10) of the coded sub-sets with the non-coded set using algorithms which are not sensitive to the transformations, the combination of the transformations undergone previously by the coded sub-sets is detected with the aid of said algorithms;
- in particular on the basis of the combination of the transformations detected by the algorithms which are not sensitive to the transformations, a key is elaborated (13) which is considered as a PIN code assigned to the person;
- and finally, the thus elaborated PIN code is used to control (16) the access authorisation (11) of the person;

by virtue of which the PIN code can be any function.

16. Method for secure authentication of a person who has a PIN personal identification code authorising his access, **characterised in that**:

- the method for secure authentication is implemented according to any one of the claims 1 to 14,
- during the comparison (10) of the coded sub-sets with the non-coded set by means of the algorithms which are not sensitive to the transformations, the combination of the transformations previously undergone by the coded sub-sets is detected with the aid of said algorithms,
- the thus found combination of transformations is searched for in a table (14) including on the one hand a list of possible combinations of transformations and on the other hand a list of PIN codes which are in a biunivocal relationship, and the PIN code is extracted in relation to the combination found,
- and finally, the PIN code selected is used to control (16) the access authorisation (11) of the person.

17. Method for secure authentication according to claim 15, **characterised in that** the person has a PIN code and **in that** the access request can be realised manually by the person directly or with the aid of his own PIN code if he is authorised in this respect after an invalid implementation of the method for automatic secure authentication according to claims 15 or 16.

18. Device for secure authentication of a person in order to authorise his access through the detection of at least one biometric characteristic of this person for the implementation of the method according to any one of the claims 1 to 14, **characterised in that** it comprises:

- a device for coding a detected image of biometric characteristics of a person including:

. capture means (3) able to detect biometric characteristics of a person,
. processing means (4) placed in dependence upon capture means, able to establish a set of said detected biometric characteristics,
.partition means (5) able to partition said set into $n$ sub-sets of biometric characteristics,
.algorithm transformation means (6) able to
. geometrically transform a sub-set through translation-permutation (P), rotation (R), homothety (H) in order to provide a transformed sub-set,

by virtue of which the coding device produces, from a non-coded set of biometric characteristics, a coded set constituted by $n$ transformed sub-sets,
- memorisation means (8) for recording the coded sub-sets of the biometric characteristics or the non-coded set of the biometric characteristics;
- comparison means (10) able to successively compare each coded sub-set with the non-coded set, said comparison means including algorithms which are not sensitive to the transformations undergone by the coded sub-sets;
- and means (13, 16) for generating an authorisation instruction placed in dependence upon said comparison means and able to generate an instruction authorisation only when the comparison means have established a majority correspondence of the coded sub-sets in the non-coded set.

19. Method for secure authentication according to claim 18, **characterised in that** said algorithm transformation means are able to realise at least a first transformation of the type translation-permutation (P) and possibly second and third transformations of the type rotation (R) / homothety (H).

20. Device for secure authentication according to claim 18 or 19, **characterised in that** it also comprises means for generating false sub-sets (GL) able to produce at least one false sub-set and to introduce this, as a deception, amongst the sub-sets of biometric characteristics, which increases the number of the sub-sets in the coded set.

21. Device for secure authentication according to any one of the claims 18 to 20, said person being the holder of a PIN personal identification code authorising his access, **characterised in that** the means (13, 16) for generating an authorisation instruction are able, using transformations which the algorithms which are not sensitive to the transformations have detected on the coded sub-sets, to determine the corresponding combination of the transformations and to elaborate, using said combination, a key which can be used as a PIN code.

22. Device for secure authentication according to any one of the claims 18 to 20, said person being the holder of a PIN personal identification code authorising his access, **characterised**

- **in that** it comprises second memorisation means (14) including a table of biunivocal relationships between a multiplicity of combinations, including the particular combination of the transformations undergone by the coded sub-sets and an equivalent multiplicity of PIN codes including, in correspondence with said particular combination, the PIN code assigned to the person,
- **in that** the algorithms included in the comparison means are able to detect the transformations undergone by the coded sub-sets and to determine the combination of these transformations,
- **in that** it comprises second comparison means (15) able to compare the combination of the transformations restituted by the algorithms and the combinations contained in the table of the second memorisation means,
- and **in that** the generating means of an authorisation instruction (16) are placed in dependence upon said second comparison means (15) and are able to generate the PIN code corresponding to the detected combination destined for an access authorisation body (11) controlled by said PIN code.

23. Device for secure authentication according to claim 21 or 22, **characterised in that** it also comprises means for manual introduction of the or of a PIN code by the person and **in that** the manual introduction means are placed in dependence upon said generating means in order to be inhibited when the device is able to automatically generate the search and the sending of the PIN code and to be activated when the automatic generation of the PIN code is not possible.

24. Device for secure authentication according to any one of the claims 18 to 23, **characterised in that** the capture means are able to detect the fingerprints of at least one finger of the person.

**Patentansprüche**

1. Gesichertes Authentifizierungsverfahren einer Person, um dieser einen Zugang durch Erfassen biometrischer Merkmale dieser Person zu gestatten,
**dadurch gekennzeichnet, dass** es die Schritte aufweist, die aus Folgendem bestehen:

   - Erstellen eines codierten Bilds biometrischer Merkmale der Person durch Umsetzen der folgenden Schritte:

     • Erfassen (3) der biometrischen Merkmale (1) der Person und Erstellen (4) einer Einheit (2) dieser biometrischen Merkmale,
     • Partitionieren (5) der Einheit Merkmale in eine Anzahl $n$ von Merkmaluntereinheiten (A-F), und
     • Anwenden (6) an mindestens eine der Untereinheiten oder an jede mindestens bestimmter Untereinheiten mindestens einer geometrischen Umformung des Typs Translation-Permutation (P), Rotation (R), Homothetie (H),

   wodurch man ein codiertes Bild der biometrischen Merkmale bildet, das aus einer Gruppe von $n$ umgeformter Untereinheiten besteht, die eine Kombination von Umformungen unter allen möglichen Kombinationen von Umformungen an den $n$ Untereinheiten von Merkmalen darstellt,
   - mit einem zeitlichen Versatz entweder vor oder nach dem Erstellen des oben genannten codierten Bilds:

     • Erfassen (3) der biometrischen Merkmale (1) der Person und Erstellen (4) einer nicht codierten Einheit (2) der biometrischen Merkmale,
     • Speichern (8) der Gruppe Untereinheiten codierter Merkmale bzw. der zeitlich zuerst erstellten nicht codierten Einheit,
     • beim Erstellen der nicht codierten Einheit bzw. der Gruppe codierter Untereinheiten von Merkmalen, die zeitlich an zweiter Stelle erstellt wird, Vergleichen (10) jeder codierten Untereinheit von Merkmalen, die über einen Algorithmus gelesen wird, der für Umformungen nicht empfindlich ist, mit der nicht codierten Einheit von Merkmalen bis zum Übereinstimmen mit einem Teil dieser Letzteren und Klassieren der codierten Untereinheit in Bezug auf den übereinstimmenden Teil der nicht codierten Einheit,

   und,
   - wenn alle codierten Untereinheiten von Merkmalen mit entsprechenden Teilen der nicht codierten Einheit von Merkmalen zum Übereinstimmen gebracht wurde, Senden (16) einer Zugangsgenehmigungsanweisung (11) für die Person.

2. Gesichertes Authentifizierungsverfahren nach Anspruch 1, **dadurch gekennzeichnet, dass** die Gruppe von $n$ Untereinheiten von Merkmalen (A-F) mindestens ein erstes Mal umgeformt wird, und dass diese erste Umformung in einer Translation-Permutation (P) besteht, die an mindestens ein Paar von Untereinheiten von Merkmalen angewandt wird.

3. Gesichertes Authentifizierungsverfahren nach Anspruch 2, **dadurch gekennzeichnet, dass** eine zweite Umformung an der Gruppe von Untereinheiten von Merkmalen, die aus der ersten Umformung hervorgeht, ausgeführt wird, und dass die zweite Umformung aus einer Rotation (R), bzw. einer Homothetie (H) besteht, die an mindestens einer Untereinheit oder an jeder mindestens bestimmter Untereinheiten der Gruppe, die aus der ersten Umformung (P) hervorgeht, ausgeführt wird.

4. Gesichertes Authentifizierungsverfahren nach Anspruch 3, **dadurch gekennzeichnet, dass** eine dritte Umformung an der Gruppe von Untereinheiten von Merkmalen, die aus der zweiten Umformung hervorgeht, durchgeführt wird, und **dadurch**, dass die dritte Umformung aus einer Homothetie (H) bzw. einer Rotation (R) besteht, die an mindestens einer Untereinheit oder an jeder mindestens bestimmter Untereinheiten der Gruppe, die aus der zweiten Umformung (R bzw. H) hervorgeht, ausgeführt wird.

5. Gesichertes Authentifizierungsverfahren nach einem der vorhergehenden Ansprüche, **dadurch gekennzeichnet, dass** man in der Gruppe der Untereinheiten von Merkmalen vor der ersten Umformung und/oder zwischen zwei Umformungen und/oder nach der letzten Umformung mindestens eine falsche Untereinheit von Merkmalen (Täuschziel) (L) hinzufügt, so dass man die Anzahl der möglichen Umformungskombinationen steigert.

6. Gesichertes Authentifizierungsverfahren nach einem der Ansprüche 1 bis 5, **dadurch gekennzeichnet, dass**:

- man damit beginnt, die nicht codierte Einheit biometrischer Merkmale zu bilden (4), die man in einem geschützten Speicher (8) speichert,
- man bei jeder Zugangsanfrage der Person die Gruppe codierter Untereinheiten biometrischer Merkmale erstellt (3-6) und die Gruppe codierter Untereinheiten an den Speicher zum Vergleichen (10) dieser mit der nicht codierten Einheit gespeicherter Merkmale sendet,
- man in Abhängigkeit von dem Ergebnis des Vergleichs eine Anweisung zu der Zugangsanfrage sendet (16), um der Person den Zugang (11) zu gestatten oder zu verbieten.

7. Gesichertes Authentifizierungsverfahren nach einem der Ansprüche 1 bis 5, **dadurch gekennzeichnet, dass**:

- man damit beginnt, die biometrischen Merkmale der Person zu erfassen und die Gruppe codierter Untereinheiten biometrischer Merkmale zu bilden (6), die man in einen Speicher (8) speichert,
- man bei jeder Zugangsanfrage der Person die biometrischen Merkmale der Person erfasst (3) und die nicht codierte Einheit ihrer biometrischen Merkmale bildet (4),
- man aus dem Speicher die Gruppe codierter Untereinheiten von Merkmalen extrahiert, die man zu der Zugangsanfrage sendet, wo man sie mit der nicht codierten Einheit vergleicht (10), und
- man in Abhängigkeit von dem Ergebnis des Vergleichs eine Anweisung sendet (16), um den Zugang (11) für die Person zu gestatten oder zu verbieten.

8. Gesichertes Authentifizierungsverfahren nach einem der Ansprüche 1 bis 7, **dadurch gekennzeichnet, dass** man nacheinander die codierten Untereinheiten von Merkmalen über die Algorithmen, die für Umformungen nicht empfindlich sind, mit der nicht codierten Einheit biometrischer Merkmale bis zu jeweiligen Übereinstimmungen der codierten Untereinheiten mit jeweiligen Teilen der nicht codierten Einheit vergleicht (10).

9. Gesichertes Authentifizierungsverfahren nach Anspruch 8, **dadurch gekennzeichnet, dass** man im Fall der Nichtübereinstimmung einer codierten Untereinheit von Merkmalen mit einem Teil der Einheit nicht codierter Merkmale einen Fehlerkorrekturcode eingreifen lässt und eine Zugangsgenehmigung sendet, wenn ein vorbestimmter Anteil der $n$ codierten Untereinheiten nach eventueller Fehlerkorrektur jeweilige Entsprechungen in der nicht codierten Einheit findet, während man ein Zugangsverbot sendet, wenn der vorbestimmte Anteil codierter Untereinheiten nach eventueller Fehlerkorrektur keine jeweiligen Übereinstimmungen in der nicht codierten Einheit findet.

10. Gesichertes Authentifizierungsverfahren nach einem der Ansprüche 1 bis 9, **dadurch gekennzeichnet, dass** man nach dem Herstellen der Übereinstimmung der codierten Untereinheiten mit der nicht codierten Einheit die Gruppe der codierten Untereinheiten und die nicht codierte Einheit hinsichtlich mindestens eines zusätzlichen, nicht in den einzelnen codierten Untereinheiten erkennbaren Merkmals, das in den vorhergehenden Schritten nicht berücksichtigt wird, vergleicht,
und dass man eine Zugangsgenehmigung nur im Fall der mehrheitlichen Übereinstimmung auch an dem zusätzlichen Merkmal sendet.

11. Gesichertes Authentifizierungsverfahren nach einem der Ansprüche 1 bis 10, **dadurch gekennzeichnet, dass** die biometrischen Merkmale die der Fingerabdrücke (1) mindestens eines Fingers der Person sind.

12. Gesichertes Authentifizierungsverfahren nach Anspruch 11, **dadurch gekennzeichnet, dass** die biometrischen Merkmale die der Fingerabdrücke mehrerer Finger der Person sind.

13. Gesichertes Authentifizierungsverfahren nach Anspruch 12, **dadurch gekennzeichnet, dass** man bei der Anzahl verwendeter Finger $p$ für jeden Finger eine Anzahl $n/p$ von Untereinheiten biometrischer Merkmale erstellt, damit die Gesamtanzahl von Untereinheiten von Merkmalen gleich $n$ bleibt.

14. Gesichertes Authentifizierungsverfahren nach einem der Ansprüche 10 bis 13, **dadurch gekennzeichnet, dass**, da die Fingerabdrücke der Finger der Hände in k allgemeine Typen eingeordnet werden können, man beim Erfassen der Merkmale der Fingerabdrücke der Person den Typ K bestimmt, zu dem sie gehören, und dass man den Typ K als zusätzliche Information zu den codierten Untereinheiten verwendet.

15. Gesichertes Authentifizierungsverfahren einer Person, die Inhaber eines persönlichen Identifikationscodes PIN ist, der ihr einen Zugang gewährt,
**dadurch gekennzeichnet:**

- **dass** man das gesicherte Authentifizierungsverfahren nach einem der Ansprüche 1 bis 14 umsetzt,
- man im Laufe des Vergleichens (10) der codierten Untereinheiten mit der nicht codierten Einheit über Algorithmen, die für Umformungen nicht empfindlich sind, mit Hilfe der Algorithmen die Kombination der Umformungen erfasst, welchen die codierten Untereinheiten zuvor unterzogen wurden,
- man insbesondere ausgehend von der Kombination erfasster Umformungen, die von den für Umformungen nicht empfindlichen Algorithmen erfasst wurden, einen Schlüssel erstellt (13), den man als den der Person zugewiesenen PIN-Code betrachtet,
- und man schließlich den so erstellten PIN-Code verwendet, um die Zugangsgenehmigung (11) der Person zu steuern (16),

so dass der PIN-Code eine beliebige Funktion sein kann.

16. Gesichertes Authentifizierungsverfahren einer Person, die Inhaber eines persönlichen Identifikationscodes PIN ist, der ihr einen Zugang gewährt,
   **dadurch gekennzeichnet:**

   - **dass** man das gesicherte Authentifizierungsverfahren nach einem der Ansprüche 1 bis 14 umsetzt,
   - man im Laufe des Vergleichens (10) der codierten Untereinheiten mit der nicht codierten Einheit über Algorithmen, die für Umformungen unempfindlich sind, mit Hilfe der Algorithmen die Kombination der Umformungen erfasst, welchen die codierten Untereinheiten zuvor unterzogen wurden,
   - man die so gefundene Kombination der Umformungen in einer Tabelle (14) sucht (15), die einerseits eine Liste möglicher Umformungskombinationen und andererseits eine Liste von PIN-Codes enthält, die in eineindeutiger Beziehung sind, und dass man den PIN-Code in Verbindung mit der gefundenen Kombination auswählt,
   - und **dass** man schließlich den ausgewählten PIN-Code verwendet, um die Zugangsgenehmigung (11) der Person zu steuern (16).

17. Gesichertes Authentifizierungsverfahren nach Anspruch 15, **dadurch gekennzeichnet, dass** die Person über einen PIN-Code verfügt und dass die Zugangsanfrage manuell von der Person direkt mit Hilfe ihres eigenen PIN-Codes erfolgen kann, wenn sie gemäß einer ungültigen Umsetzung des automatischen gesicherten Authentifizierungsverfahrens nach Anspruch 15 oder 16 zugelassen ist.

18. Gesicherte Authentifizierungsvorrichtung einer Person, um dieser einen Zugang durch Erfassen mindestens eines biometrischen Merkmals dieser Person zu gestatten, zum Umsetzen des Verfahrens nach einem der Ansprüche 1 bis 14, **dadurch gekennzeichnet, dass** sie Folgendes aufweist:

   - eine Vorrichtung zum Codieren eines erfassten Bilds biometrischer Merkmale einer Person, Folgendes aufweisend:

      • Sensormittel (3), die biometrische Merkmale einer Person erfassen können,
      • Verarbeitungsmittel (4), die von den Sensormitteln abhängen, die eine Einheit der erfassten biometrischen Merkmale erstellen können,
      • Partitionsmittel (5), die die Einheit in $\underline{n}$ Untereinheiten biometrischer Merkmale aufteilen können,
      • algorithmische Umformmittel (6), die geometrisch eine Untereinheit durch Translation-Permutation (P), Rotation (R), Homothetie (H) umformen können, um eine umgeformte Untereinheit zu liefern,

   so dass die Codiervorrichtung aus einer nicht codierten Einheit biometrischer Merkmale eine codierte Einheit gibt, die aus $\underline{n}$ umgeformten Untereinheiten besteht,
   - Speichermittel (8) zum Speichern der codierten Untereinheiten biometrischer Merkmale oder der nicht codierten Einheit der biometrischen Merkmale,
   - Vergleichsmittel (10), die nacheinander jede codierte Untereinheit mit der nicht codierten Einheit vergleichen können, wobei die Vergleichsmittel Algorithmen aufweisen, die für die Umformungen, welchen die codierten Untereinheiten unterworfen werden, nicht empfindlich sind,
   - und Mittel (13, 16), die eine Genehmigungsanweisung erzeugen, und die von den Vergleichsmitteln abhängen und eine Genehmigungsanweisung nur erzeugen können, wenn die Vergleichsmittel eine mehrheitliche Übereinstimmung der codierten Untereinheiten in der nicht codierten Einheit erstellt haben.

19. Gesicherte Authentifizierungsvorrichtung nach Anspruch 18, **dadurch gekennzeichnet, dass** die algorithmischen Umformungsmittel mindestens eine erste Umformung des Typs Translation-Permutation (P) ausführen können und eventuell zweite und dritte Umformungen des Typs Rotation (R) bzw. Homothetie (H).

20. Gesicherte Authentifizierungsvorrichtung nach Anspruch 18 oder 19, **dadurch gekennzeichnet, dass** sie ferner Mittel zum Erzeugen falscher Untereinheiten (GL) aufweist, die mindestens eine falsche Untereinheit erzeugen und diese als Täuschziel in die Untereinheiten biometrischer Merkmale einfügen können, was die Anzahl der Untereinheiten in der codierten Einheit erhöht.

21. Gesicherte Authentifizierungsvorrichtung nach einem der Ansprüche 18 bis 20, wobei die Person Inhaber eines persönlichen Identifizierungscodes PIN ist, der einen Zugang gestattet, **dadurch gekennzeichnet, dass** die Mittel (13, 16) zum Erzeugen einer Genehmigungsanweisung ausgehend von Umformungen, die die für Umformungen nicht empfindlichen Algorithmen an den codierten Untereinheiten erfasst haben, die entsprechende Kombination der Umformungen bestimmen und ausgehend von der Kombination einen Schlüssel erstellen können, der als PIN-Code verwendet werden kann.

22. Gesicherte Authentifizierungsvorrichtung nach einem der Ansprüche 18 bis 20, wobei die Person Inhaber eines persönlichen Identifikationscodes PIN ist, der ihr einen Zugang gewährt, **dadurch gekennzeichnet**

- **dass** sie zweite Speichermittel (14) aufweist, die eine Tabelle eineindeutiger Beziehungen zwischen mehreren Kombinationen enthält, unter welchen sich die bestimmte Kombination der Umformungen befindet, welchen die codierten Untereinheiten unterzogen wurden, und mehrere äquivalente PIN-Codes unter welchen sich entsprechend der oben genannten besonderen Kombination der der Person zugewiesene PIN-Code befindet,
- **dass** die in den Vergleichsmitteln enthaltenen Algorithmen die Umformungen erfassen können, welchen die codierten Untereinheiten unterworfen wurden und die Kombination dieser Umformungen bestimmen können,
- **dass** sie zweite Vergleichsmittel (15) aufweist, die die Kombination der von den Algorithmen wiederhergestellten Umformungen mit den Kombinationen vergleichen können, die in der Tabelle der zweiten Speichermittel enthalten sind,
- und **dass** die Mittel zum Erzeugen einer Genehmigungsanweisung (16) von den zweiten Vergleichsmitteln (15) abhängen und den PIN-Code, der der erfassten Kombination entspricht, für ein Zugangsgenehmigungsorgan (11), das von dem PIN-Code gesteuert wird, erzeugen können.

23. Gesicherte Authentifizierungsvorrichtung nach Anspruch 21 oder 22, **dadurch gekennzeichnet, dass** sie ferner Mittel zum manuellen Eingeben des oder eines PIN-Codes durch die Person aufweist, und dass die Mittel zum manuellen Eingeben von den oben genannten Erzeugungsmitteln abhängen, um deaktiviert zu werden, wenn die Vorrichtung automatisch die Suche und das Senden des PIN-Codes erzeugen kann, und um aktiviert zu werden, wenn das automatische Erzeugen des PIN-Codes nicht möglich ist.

24. Gesicherte Authentifizierungsvorrichtung nach einem der Ansprüche 18 bis 23, **dadurch gekennzeichnet, dass** die Sensormittel die Fingerabdrücke mindestens eines Fingers der Person erfassen können.

FIG.1A

FIG.1B.

FIG.2.

FIG.3.

FIG.4.

C  B  A  E  D  F

## FIG.5.

C  B  ▨ L  A  ▨ L  E  D  F

## FIG.6.

FIG.7.

FIG.8.

FIG.9.

FIG.10.

FIG.11.

**RÉFÉRENCES CITÉES DANS LA DESCRIPTION**

**Documents brevets cités dans la description**

- FR 2671210